# FASCICULE DE BREVET EUROPEEN

(11) **EP 2 890 026 B1**
(45) Date de publication et mention de la délivrance du brevet: **21.09.2016**
(21) Numéro de dépôt: 14290379.8
(22) Date de dépôt: 12.12.2014
(51) Int. Cl.: H04B 7/155, H04W 40/22

(54) **Procédé de communication mis en oeuvre par un noeud de relais**
Kommunikationsverfahren, das über einen Relaisknoten umgesetzt wird
Communication method implemented by a relay node

(30) Priorité: 30.12.2013 FR 1363698
(43) Date de publication de la demande: 01.07.2015
(73) Titulaire: Airbus DS SAS, 78990 Elancourt (FR)
(72) Inventeur: Marque-Pucheu, Gérard, 78480 Verneuil (FR); Pison, Laurent, 78760 Jouars Ponchartrain (FR); Paterour, Olivier, 78280 Guyancourt (FR)
(74) Mandataire: Cabinet Camus Lebkiri

(56) Documents cités:
- EP-A1- 2 584 829
- 3GPP: "3GPP TR 23.703 v1.0.0 - ProSe Communication", , 16 décembre 2013 (2013-12-16), pages 121-275, XP002730606, Extrait de l'Internet: URL:www.3gpp.org/ftp/Specs/archive/23_seri es/23.703/23703-100.zip [extrait le 2014-09-30]

## Description

La présente invention se rapporte au domaine des télécommunications et concerne plus particulièrement un noeud de relais, un procédé et un système de communication.

### ETAT DE LA TECHNIQUE

Le projet de partenariat de 3ème génération (Third Generation Partnership Project ou 3GPP en langue anglaise) a défini, à partir de la version 10 (Release 10) de sa norme, des réseaux appelés « Evolution à Long Terme » (Long Term Evolution ou LTE). En particulier, la version 10 de la norme 3GPP LTE inclut le support pour les noeuds de relais (Relay Nodes) comme décrit par exemple dans la spécification 3GPP TR 36.806 V9.0.0.

Un autre exemple se trouve dans 3GPP TR 23.703 pages 121-275.

Un noeud de relais est un noeud de réseau intermédiaire, généralement de faible puissance, qui relaie des paquets de données entre un ou plusieurs terminaux mobiles, par exemple des équipements d'utilisateur LTE, et une station de base, appelée « noeud B donneur » (DeNB) dans la norme 3GPP LTE, reliée elle-même à la partie terrestre fixe du réseau LTE.

Le noeud de relais ne possède pas sa propre connexion de liaison terrestre fixe, mais est connecté au noeud B donneur par l'intermédiaire d'une liaison de communication sans fil. Un tel noeud de relais est ainsi avantageusement déployé afin d'étendre la couverture cellulaire d'un noeud B, par exemple dans les zones où aucune connexion au noeud B n'est disponible.

La liaison de communication entre le noeud de relais et le noeud B donneur est appelée liaison de raccordement (ou interface Un) et la liaison entre le noeud de relais et un terminal mobile connecté audit noeud de relais est appelée liaison d'accès (ou interface Uu).

Afin de communiquer entre eux, les équipements d'un réseau LTE échangent des données qui sont acheminées dans des paquets à travers le réseau de manière connue en utilisant un protocole de routage Internet (Internet Protocol ou IP en langue anglaise). Un tel protocole IP définit les règles de routage (i.e. d'acheminement) dans le réseau et correspond à un protocole de niveau 3 selon le modèle « Open Systems Interconnection » (OSI) bien connu de l'homme du métier.

Le noeud de relais LTE a pour but de transférer les paquets de données IP de l'équipement d'utilisateur au noeud B donneur et vice-versa.

Dans le cas d'une communication de groupe, définie dans la norme LTE sous l'acronyme Group Communication System Enablers (GCSE), entre un serveur d'application pour la communication de groupe relié au réseau LTE et une pluralité d'équipements d'utilisateur connectés au noeud de relais via la liaison d'accès, chacun des équipements d'utilisateur comprend une application de communication de groupe qui communique avec le serveur d'application par un lien de communication IP distinct appelé tunnel. Ce mode de fonctionnement est couramment appelé le mode de communication « point-à-point » (unicast en langue anglaise).

Dans un tel lien, les paquets de données à destination d'un équipement d'utilisateur sont transférés de manière transparente par le noeud de relais, c'est-à-dire sans être traités ou analysés autrement qu'au niveau de leur adresse de routage IP.

Il est donc nécessaire de créer autant de tunnels IP distincts que d'équipements d'utilisateur participant à la communication de groupe, ce qui entraine une consommation importante de bande-passante, notamment entre le noeud de relais et le noeud B donneur et ce d'autant que la bande-passante disponible au niveau du noeud de relais doit être partagée entre la liaison d'accès et la liaison de raccordement du noeud de relais, ce qui présente donc des inconvénients importants.

### PRESENTATION GENERALE DE L'INVENTION

La présente invention a pour but de remédier au moins en partie à ces inconvénients en proposant un procédé de communication mis en oeuvre par un noeud de relais qui permette à la fois une meilleure utilisation de la bande-passante entre le noeud de relais et le noeud B donneur et un traitement efficace des paquets de données par le noeud de relais.

A cet effet, l'invention a pour objet un procédé de communication de paquets de données dans un réseau de télécommunications, ledit procédé, mis en oeuvre par un noeud de relais dudit réseau de télécommunications entre une station de base et au moins un équipement d'utilisateur, étant remarquable en ce qu'il comprend :
- une étape de réception d'une pluralité de paquets de données,
- une étape de sélection, selon au moins un critère de sélection, d'au moins un paquet de donnée parmi les paquets de données reçus,
- une étape de traitement applicatif du paquet de données sélectionné, et,
- une étape d'émission du paquet de données traité vers l'équipement d'utilisateur.

Selon un mode de mise en oeuvre préféré du procédé selon l'invention, une pluralité de paquets de données est sélectionnée et traitée parmi les paquets reçus.

De préférence, le noeud de relais étant configuré pour communiquer avec la station de base sur un premier lien de communication radio et avec l'équipement d'utilisateur sur un deuxième lien de communication radio, la pluralité de paquets de données est reçue sur le premier lien de communication radio ou sur le deuxième lien de communication radio et l'émission des paquets de données traités est réalisée sur le deuxième lien de communication radio.

De préférence encore, le réseau de télécommunications est un réseau de type 3GPP LTE ou ultérieur et la station de base est un noeud B donneur.

Selon un aspect de l'invention, l'étape de traitement applicatif du paquet de données sélectionné comprend une duplication et/ou une modification du paquet de données sélectionné.

Dans le cas d'une communication partagée par un groupe comprenant une pluralité d'équipements d'utilisateur connectés au noeud de relais, un seul tunnel IP est ainsi nécessaire entre la station de base et le noeud de relais étant donné que celui-ci peut, selon l'invention, sélectionner les paquets de données associés à une communication de groupe reçus d'un serveur d'application de communication de groupe via la station de base sur la liaison de raccordement afin de les dupliquer puis de les émettre sur la liaison d'accès vers chacun des équipements d'utilisateur participant à la communication de groupe.

Dans ce cas, le serveur d'application est configuré pour échanger des paquets d'une communication de groupe avec le noeud de relais sur un seul lien de communication de paquets de données (i.e. dans un seul tunnel IP).

Toujours dans le cas d'une communication de groupe, le noeud de relais peut avantageusement sélectionner des paquets de données, associés à ladite communication de groupe, envoyés par l'un des équipements d'utilisateur à destination, notamment, d'autres équipements d'utilisateur connectés audit noeud de relais et participant à la communication de groupe, afin de les transmettre à ces derniers sans qu'il y ait besoin de les acheminer jusqu'au serveur d'application. Ceci permet d'éviter les allers-retours (connus de l'homme du métier sous le nom de « tromboning ») à travers le réseau entre le noeud de relais et le serveur d'application, ce qui diminue de manière importante le nombre de paquets de données échangés et donc la consommation de bande-passante sur la liaison de raccordement entre le noeud de relais et la station de base.

La sélection de paquets de données suivant un ou, de préférence, plusieurs critères correspond à un filtrage des paquets de données de sorte que seuls les paquets de données satisfaisant au critère de sélection soient ensuite traités au niveau applicatif par le noeud de relais, les paquets de données non sélectionnés étant alors simplement acheminés vers leur destinataire (équipement d'utilisateur ou noeud B donneur) par le noeud de relais de manière connue.

Le noeud de relais conserve ainsi avantageusement sa fonction de routage des paquets de données lorsque ceux-ci ne satisfont aucun critère de sélection tout en permettant un traitement applicatif de paquets de données répondant à au moins l'un du ou des critères de sélection prédéfinis.

De préférence, les paquets de données sont des paquets de type Internet Protocol (IP) et le ou les critères de sélection des paquets de données IP sont l'un d'une adresse IP source et/ou destination, d'un numéro de port source et/ou destination, d'un type de protocole (à détailler) et/ou de la direction du flux de paquets de données (montante vers le noeud B donneur ou descendante vers un équipement d'utilisateur).

Avantageusement, le procédé comprend une étape préliminaire de réception, de préférence d'un serveur d'application, du ou des critères de sélection.

Pour ce faire, le noeud de relais comprenant un module de gestion configuré pour établir et gérer au moins un lien de communication avec le serveur d'application permettant d'échanger des données comprenant le ou les critères de sélection, le procédé comprend une étape d'émission par le serveur d'application sur un lien de communication établit par le module de gestion d'une donnée de configuration comprenant au moins un critère de sélection et une étape de réception par le noeud de relais sur ledit lien de communication de ladite donnée de configuration comprenant ledit critère de sélection.

Par les termes « traitement applicatif », on entend que les paquets de données sélectionnés subissent un traitement au niveau de leur partie de transport IP ou de leurs données applicatives (niveau 7 du modèle OSI).

Un tel traitement peut consister en une duplication des paquets de données sélectionnés ou bien en une modification des paquets de données sélectionnés selon le critère suivant lequel ils ont été sélectionnés et/ou suivant leur nature.

Par exemple, le traitement au niveau de leur partie de transport IP, réalisé sous contrôle de l'application, peut consister à modifier la partie de transport IP des paquets de données afin de les acheminer selon un mode d'acheminement spécifique tel que, par exemple, un mode unicast sur la liaison de raccordement Un ou un mode broadcast sur la liaison d'accès Uu permettant la diffusion de paquets de données IP sur la partie descendante de la liaison d'accès (i.e. du noeud de relais vers les équipements d'utilisateur).

De même, le traitement des données applicatives des paquets peut consister en un traitement de type proxy, connu de l'homme du métier, ou par une application installée sur le noeud de relais qui va modifier les paquets au niveau 7, par exemple une application de type Push-To-Talk (PTT) ou bien serveur de localisation (Localisation server) connues de l'homme du métier.

L'invention concerne aussi un noeud de relais entre une station de base et au moins un équipement d'utilisateur pour la communication de paquets de données dans un réseau de télécommunications, ledit noeud de relais comprenant un module de routage configuré pour recevoir et pour émettre des paquets de données, le noeud de relais étant remarquable en ce que le module de routage est en outre configuré pour sélectionner, selon au moins un critère de sélection, au moins un paquet de données parmi les paquets de données reçus et en ce qu'il comprend un module de traitement applicatif configuré pour traiter le paquet de données sélectionné par le module de routage.

Le ou les paquets de données reçus par le module de réception, et sélectionnés, par le module de sélection, sont ainsi transférés par le module de routage vers le module de traitement applicatif afin d'être traités puis le ou les paquets de données ainsi traités sont envoyés par le module de routage vers leur destination.

Le ou les paquets de données reçus par le module de réception mais non-sélectionnés par le module de sélection sont transférés directement par le module de routage vers leur destination. Plus précisément, le ou les paquets de données non-sélectionnés reçus de la station de base sont acheminés ou routés directement vers le ou les équipements d'utilisateur destinataires desdits paquets et/ou le ou les paquets de données non-sélectionnés reçus du ou des équipements d'utilisateur sont routés directement vers la station de base.

De préférence, le module de routage comprend un filtre de sélection, selon au moins un critère de sélection, d'au moins un paquet de données parmi les paquets de données reçus.

Selon un aspect de l'invention, le module de traitement applicatif est configuré pour traiter un paquet de données sélectionné selon une pluralité de modes de traitement correspondant à un type d'application associé audit paquet de données sélectionné.

Selon un aspect préféré de l'invention, le module de traitement applicatif est configuré pour dupliquer des paquets de données, notamment dans le cas de paquets de données correspondant à une communication de groupe.

Selon un autre aspect préféré de l'invention, le module de traitement applicatif est configuré pour modifier des paquets de données, par exemple dans le cas de paquets de données correspondant à une application de type Push-To-Talk (PTT) ou bien serveur de localisation (Localisation server) connues de l'homme du métier.

Les critères de sélection peuvent permettre avantageusement de caractériser le paquet de données de sorte que le module de traitement applicatif lui applique le mode de traitement correspondant au type d'application associée.

De préférence, les critères de sélection sont configurables dans le module de routage.

Avantageusement, le module de routage est configuré pour recevoir au moins un critère de sélection, de préférence d'un serveur d'application, et pour mettre en oeuvre ledit critère de sélection reçu.

L'invention concerne également un système de télécommunications comprenant :
- un noeud de relais tel que présenté précédemment,
- au moins un équipement d'utilisateur configuré pour échanger des paquets de données avec ledit noeud de relais,
- une station de base configurée pour échanger des paquets de données avec le noeud de relais.

De préférence, le système comprend en outre un serveur d'application configuré pour échanger des paquets de données avec le noeud de relais via la station de base.

De manière préférée, le système comprend une pluralité d'équipements d'utilisateur configurés pour envoyer et recevoir des paquets de données relatifs à une communication de groupe et le serveur d'application est configuré pour envoyer des paquets de données, relatifs à une communication de groupe desdits équipements d'utilisateur, au noeud de relais dans un seul tunnel de communication, le noeud de relais dupliquant alors les paquets reçus pour les envoyer à chacun des équipements d'utilisateur de la communication de groupe.

L'invention concerne aussi un programme d'ordinateur comportant des instructions pour la mise en oeuvre du procédé tel que présenté précédemment lorsque le programme est exécuté par au moins un processeur.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre schématiquement une forme de réalisation du système selon l'invention.
La figure 2 illustre schématiquement une forme de réalisation du noeud de relais selon l'invention définie dans le plan d'utilisateur.
La figure 3 illustre schématiquement une première forme de réalisation du noeud de relais selon l'invention définie dans le plan de contrôle.
La figure 4 illustre schématiquement une deuxième forme de réalisation du noeud de relais selon l'invention définie dans le plan de contrôle.
La figure 5 illustre un mode de réalisation du procédé selon l'invention.

### DESCRIPTION DETAILLEE DE L'INVENTION

### Description d'une forme de réalisation du système selon l'invention

### I. Système 1

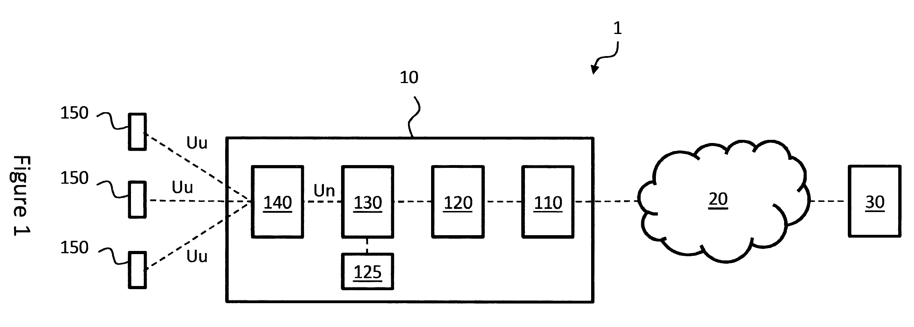

La forme de réalisation du système 1 selon l'invention illustrée à la figure 1 comprend un réseau de communication 10 de type Evolution à Long Terme ou Long-Term Evolution (LTE) en langue anglaise.

Le réseau de communication LTE 10 est relié à un serveur d'application 30 via un réseau d'interconnexion 20, par exemple Internet.

Le serveur d'application 30 comprend une ou plusieurs applications configurées pour recevoir et envoyer des paquets de données IP (Internet Protocol) comprenant des données applicatives associées auxdites applications, respectivement des ou aux équipements d'utilisateur 150 via le réseau d'interconnexion 20 et le réseau de communication 10.

A titre d'exemple, une application installée sur le serveur d'application 30 peut être une application de communication de groupe connue sous le nom de Group Communication System Enabler (GCSE) dans le vocabulaire usuel des réseaux 3GPP LTE.

Toujours en référence à la figure 1, le serveur d'application 30 est configuré pour envoyer des paquets de données, relatifs à une communication de groupe d'une pluralité d'équipements d'utilisateur 150, à un noeud de relais 140 auquel sont connectés lesdits équipements d'utilisateur 150 dans un seul tunnel de communication IP.

Le serveur d'application 30 est adapté pour envoyer des données de configuration comprenant au moins un critère de sélection de paquets de données à un noeud de relais 140 du réseau de communication 10 décrit ci-après.

### 1) Réseau de communication LTE 10

Afin de permettre au serveur d'application 30 d'échanger des paquets de données avec les équipements d'utilisateur 150 via le réseau d'interconnexion 20, le réseau de communication LTE 10 comprend, toujours en référence à la figure 1, une passerelle de réseau pour paquets de données (Packet Data Network Gateway ou PGW en langue anglaise) 110, une passerelle servante (Serving Gateway ou SGW) 120, une entité de gestion de la mobilité (Mobility Management Entity ou MME) 125, une station de base 130, un noeud de relais 140 et une pluralité d'équipements d'utilisateur 150.

La passerelle de réseau pour paquets de données 110 est un point d'accès permettant au serveur d'application 30 de communiquer avec le réseau de communication 10 via le réseau d'interconnexion Internet 20.

La passerelle servante 120 est disposée entre la passerelle de réseau pour paquets de données 110 et le noeud B donneur 130 et est configurée pour router, c'est-à-dire aiguiller, des paquets de données entre la passerelle réseau de paquets de données 110 et la station de base 130.

L'entité de gestion de la mobilité MME 125 est configurée pour établir et modifier les liaisons de transport LTE (« LTE Bearers ») entre la passerelle de réseau pour paquets de données PGW 110, la passerelle servante SGW 120, la station de base 130 et le noeud de relais 140, afin de véhiculer des paquets de données applicatives.

La station de base 130 d'un réseau LTE est appelée « noeud B ». Un tel noeud B réalise la jonction entre la passerelle servante 120 et l'interface de communication radio. Le noeud B est dit « donneur » car il est connecté à un noeud relais 140.

Le noeud de relais 140 est un noeud de réseau intermédiaire, généralement de faible puissance, qui relaie des paquets de données entre les équipements d'utilisateur 150 et le noeud B donneur 130.

Le noeud de relais 140 ne possède pas de connexion de liaison terrestre fixe, mais est connecté par l'intermédiaire d'une liaison de communication sans fil au noeud B donneur 130.

Un noeud ou plusieurs noeuds de relais 140 peuvent être déployés pour étendre la couverture cellulaire d'un noeud B donneur 130, par exemple dans les zones où aucune connexion au noeud B donneur 130 n'est disponible.

La liaison de communication sans fil entre le noeud de relais 140 et le noeud B donneur 130 est appelée liaison de raccordement (ou interface) et la liaison de communication entre le noeud de relais 140 et un équipement d'utilisateur 150 connecté audit noeud de relais 140 est appelée liaison d'accès (ou interface). La liaison de raccordement peut être une interface de type Un et la liaison d'accès peut être une interface de type Uu xomme illustré sur la figure 1. En variante, la liaison de raccordement peut être une interface de type Uu et la liaison d'accès peut être une interface de type PC9 comme défini dans la spécification 3GPP TS 23.703 V1.0.0.

Les équipements d'utilisateur 150 sont configurés pour échanger des données applicatives encapsulées dans des paquets de données avec le serveur d'application 30 à travers le réseau de communication 10 via le noeud de relais 140.

Afin d'être aiguillées, de manière connue de l'homme du métier, jusqu'au serveur d'application 30, de telles données applicatives sont encapsulées par le noeud de relais 140 dans des paquets de données IP.

Une seule passerelle de réseau pour paquets de données 110, une seule passerelle servante 120, un seul noeud B donneur 130 et un seul noeud de relais 140 ont été représentés sur la figure 1 mais il va de soi que le réseau de communication 10 peut comprendre une pluralité de passerelles de réseau pour paquets de données 110, de passerelles servantes 120, de noeuds B donneur 130 et de noeuds de relais 140.

Par ailleurs, d'autres équipements du réseau de communication LTE 10, bien connus de l'homme du métier mais qui n'ont pas été représentés sur la figure 1 par souci de clarté, peuvent exister entre un noeud B donneur 140 et le réseau d'interconnexion 20.

Enfin, il va également de soi qu'un seul équipement d'utilisateur 150 peut être connecté au noeud de relais 140 selon l'invention.

### 2) Noeud de relais 140

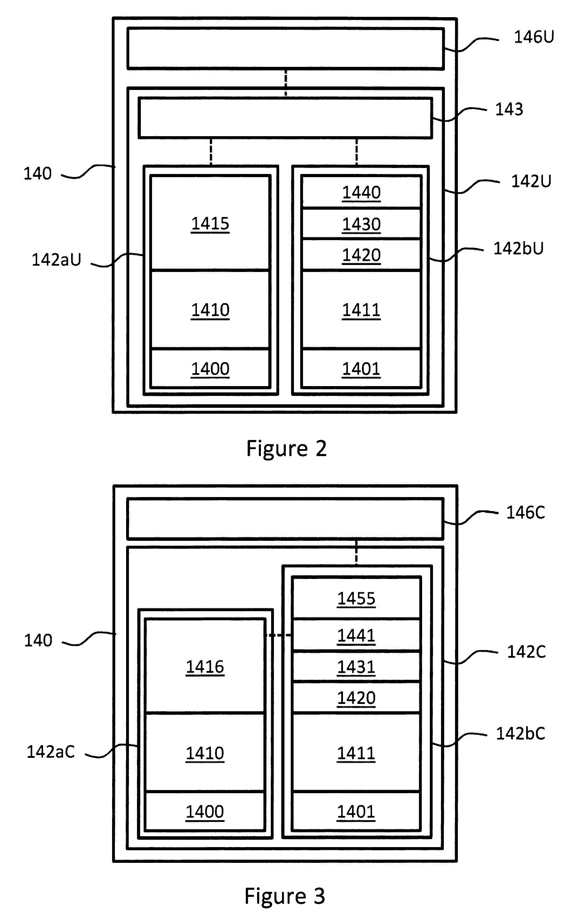

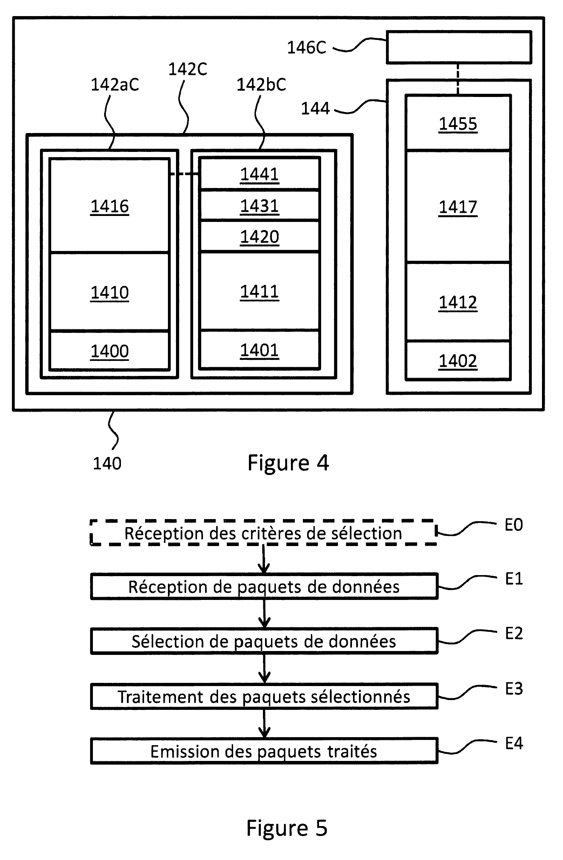

Une forme de réalisation du noeud de relais 140 selon l'invention est illustrée à la figure 2 au niveau de son plan d'utilisateur et aux figures 3 et 4 au niveau de son plan de contrôle.

Le plan utilisateur définit de manière connue de l'homme du métier les protocoles utilisés pour échanger des paquets comprenant des données applicatives entre un équipement d'utilisateur et un serveur d'application ou entre deux équipements d'utilisateur. La figure 2 décrit ces protocoles selon le modèle 3GPP.

Le plan de contrôle définit de manière connue de l'homme du métier les protocoles de signalisation utilisés pour échanger des paquets de données.

Le noeud de relais selon l'invention comprend un module de routage 142U (dans le plan d'utilisateur) et 142C (dans le plan de contrôle) et un module de traitement applicatif 146U (dans le plan d'utilisateur) et 146C (dans le plan de contrôle).

### a) Module de routage 142U/142C

Le noeud de relais 140 comprend un module de routage 142U/142C configuré de manière connue pour communiquer, d'une part, avec les équipements d'utilisateurs 150 via un premier sous-module de communication 142aU/142aC via la liaison d'accès Uu et, d'autre part, avec le noeud B donneur 130 par un deuxième sous-module de communication 142bU/142bC via la liaison de raccordement Un.

En d'autres termes, le module de routage 142U/142C est configuré pour recevoir et émettre des paquets de données du ou vers les équipements d'utilisateur 150 via le premier sous-module de communication 142aU/142aC et pour recevoir et émettre des paquets de données du ou vers le noeud B donneur 130 via le deuxième sous-module de communication 142bU/142bC.

Dans le plan d'utilisateur, comme illustré à la figure 2, le premier sous-module de communication 142aU comprend de manière connue :
- une couche physique 1400 également appelée couche de niveau 1 dans la spécification 3GPP TS 36.201,
- une couche de niveau 2 1410 comprenant une sous-couche Medium Access Protocol (MAC) conforme à la spécification 3GPP TS 36.321, une sous-couche Radio Link Control (RLC) conforme à la spécification 3GPP TS 36.322 et une sous-couche Packet Data Convergence Protocol (PDCP) conforme à la spécification 3GPP TS 36.323, et
- une couche de niveau 3 1415 vide (« void » en langue anglaise) pour le plan d'utilisateur car c'est du IP directement en sortant du PDCP.

Toujours dans le plan d'utilisateur et en référence à la figure 2, le deuxième sous-module de communication 142bU comprend de manière connue :
- une couche de niveau 1 1401 semblable à la couche physique 1400 du premier sous-module de communication 142aU,
- une couche de niveau 2 1411 semblable à la couche de niveau 2 1400 premier sous-module de communication 142aU, et
- une couche de niveau 3 comportant une première sous-couche 1420 de protocole IP (Internet Protocol - IETF RFC 791 (Ipv4) ou IETF RFC 2460 (Ipv6)), une deuxième sous-couche 1430 de protocole UDP (définie par la spécification IETF RFC 768) et une troisième sous-couche 1440 GTP-U - GPRS (General Packet Radio System) Tunnelling Protocol - User Plane conforme à la spécification 3GPP TS 29.281.

Selon l'invention, le module de routage 142U comprend un filtre 143 configuré pour sélectionner, selon au moins un critère de sélection, un ou plusieurs paquets de données reçus par le premier sous-module de communication 142aU ou par le deuxième module de communication 142bU.

Un tel filtre 143 est configurable et permet de sélectionner un ou plusieurs paquets de données IP reçus d'un équipement d'utilisateur 150 par le premier sous-module de communication 142aU ou bien reçus du noeud B donneur 130 par le deuxième sous-module de communication 142bU.

La configuration du filtre 143 est réalisée en définissant un ou plusieurs critères de sélection tels que, par exemple, une adresse IP source et/ou destination, un numéro de port source et/ou destination, un type de protocole (TCP, UDP, RTP... connus de l'homme du métier), la direction d'échange des paquets (montante en direction du noeud B donneur ou descendante en direction des équipements d'utilisateurs, etc.

Par exemple, les applications (serveurs et clients) utilisent une adresse IP ou un ensemble d'adresses IP. Ces applications utilisent un ou plusieurs protocoles. Suivant le ou les protocoles utilisés par ces applications, un port ou un ensemble de ports peuvent être utilisés comme critère de sélection.

Par exemple encore, pour les communications de groupe, l'adresse IP et les ports dont sont issus les paquets de données venant d'un serveur de type Push-To-Talk (PTT) peuvent être connus de manière à les intercepter aussi bien pour réaliser du contrôle dans le plan de contrôle avec, par exemple, les protocoles SIP, XMPP... connus de l'homme du métier, que du média dans le plan d'utilisateur avec, par exemple, les protocoles RTP, RTSP ... connus de l'homme du métier.

A l'inverse, les paquets de données reçus d'un équipement d'utilisateur 150 et ne remplissant pas le ou les critères de filtrage sont transmis directement au deuxième sous-module de communication 142bU afin d'être envoyés au noeud B donneur 130.

De même, les paquets de données reçus du noeud B donneur 130 et ne remplissant pas le ou les critères de filtrage sont transmis directement au premier sous-module de communication 142bU afin d'être envoyés à un ou plusieurs équipement d'utilisateur 150 destinataire desdits paquets.

Les paquets de données remplissant un ou plusieurs critères de filtrage sont aiguillés vers le module de traitement applicatif 146U décrit ci-après.

Le filtre 143 se présente par exemple sous la forme d'un filtre Traffic Flow Template (TFT) connu de l'homme du métier.

Afin de configurer le filtre 143, le module de routage 142U/142C est configuré pour recevoir le ou les critères de sélection (i.e. de filtrage) des paquets de données, de préférence du serveur d'application 30.

A cette fin, en référence aux figures 3 et 4, le noeud de relais 140 comprend un module de gestion 1455 configuré pour établir et gérer la signalisation dans le plan de contrôle, permettant notamment de recevoir le ou les critères de sélection des paquets de données.

Un tel module de gestion 1455 se présente dans cet exemple sous la forme d'une couche de non-accès (Non-Access Stratum ou NAS en langue anglaise) connu de l'homme du métier.

Dans une première forme de réalisation illustrée à la figure 3, le module de gestion est une sous-couche NAS 1455 du deuxième sous-module de communication 142bC dans le plan de contrôle.

Dans ce plan de contrôle, le premier sous-module de communication 142aC établit le plan d'utilisateur qui permettra de recevoir et/ou envoyer des paquets de données de contrôle comprenant notamment le ou les critères de sélection en utilisant une couche de niveau 1 1400 semblable à la couche de niveau 1 1400 du premier sous-module de communication 142aU décrite ci-avant en référence à la figure 2, une couche de niveau 2 1410 semblable à la couche de niveau 2 1410 du premier sous-module de communication 142aU décrite ci-avant en référence à la figure 2 et une couche de niveau 3 1416 RRC (Radio Ressource Control) conforme à la spécification 3GGP TS 36.331.

De même, dans ce plan de contrôle, le deuxième sous-module de communication 142bC reçoit et/ou envoie des paquets de données de contrôle en utilisant une couche de niveau 1 1401 semblable à la couche de niveau 1 1400 du premier sous-module de communication 142aC décrite en référence à la figure 3, une couche de niveau 2 1411 semblable à la couche de niveau 2 1410 du premier sous-module de communication 142aC décrite en référence à la figure 3 et une couche de niveau 3 comprenant :
- une première sous-couche 1420 semblable à la première sous-couche de niveau 1420 du deuxième sous-module de communication 142bU décrite ci-avant en référence à la figure 2,
- une deuxième sous-couche 1431 de protocole SCTP (Stream Control Transmission Protocol définie dans la spécification IETF RFC 4960 utilisée comme couche de transport d'un lien de signalisation appelé S1-Mobility Management Entity),
- une troisième sous-couche 1441 de protocole S1AP (S1 Application Protocol définie dans la spécification 3GPP TS 36.413 et qui fournit la signalisation entre l'interface d'accès radio E-UTRAN and le coeur de paquets évolué ou Evolved packet core), et,
- la sous-couche NAS 1455.

La sous-couche de protocole NAS (Non Access Stratum) est conforme à la spécification 3GPP TS 24.301 et définit les procédures utilisées par les protocoles pour la gestion de la mobilité et des sessions entre un équipement d'utilisateur 150 et l'entité de gestion de la mobilité MME 125.

Dans une deuxième forme de réalisation illustrée à la figure 4, le noeud de relais 140 comprend un premier sous-module de communication 142aC et un deuxième sous-module de communication 142bC identiques à ceux de la forme de réalisation décrite précédemment en référence à la figure 3 à l'exception de la sous-couche NAS 1455 qui n'est plus localisée dans le deuxième sous-module de communication 142bC mais dans un module de communication 144, externe au module de routage 142C, le module de traitement 146C étant en lien de communication avec la sous-couche NAS 1455.

Ce module de communication 144 comprend, toujours dans le plan de contrôle :
- une couche de niveau 1 1402 semblable à la couche de niveau 1 1400 du premier sous-module de communication 142aC décrite ci-avant en référence à la figure 3,
- une couche de niveau 2 1412 semblable à la couche de niveau 2 1410 du premier sous-module de communication 142aC décrite ci-avant en référence à la figure 3,
- une couche de niveau 3 1417 semblable à la couche de niveau 3 1416 du premier sous-module de communication 142aC décrite ci-avant en référence à la figure 3, et
- une sous-couche NAS 1455 semblable à la couche NAS 1455 du deuxième sous-module de communication 142bC décrite ci-avant en référence à la figure 3.

En d'autres termes, dans ce plan de contrôle, ce module de communication 144 comprend des couches semblables à celles du premier sous-module de communication 142aC du module de routage 142C et comprend en outre la sous-couche de gestion NAS 1455.

La couche de niveau 11402, la couche de niveau 2 1412 et la couche de niveau 3 1417 du module de communication 144 sont utilisées de manière connue pour connecter initialement le noeud de relais 140 à un noeud B.

La sous-couche NAS 1455 est donc avantageusement ajoutée à ce deuxième module de routage existant qui est donc réutilisé pour établir la signalisation permettant au noeud de relais 140 de recevoir les critères de sélection du serveur d'application 30 dans le plan d'utilisateur.

### b) Module de traitement applicatif 146U/146C

Selon l'invention, en référence à la figure 2, le noeud de relais 140 comprend un module de traitement applicatif 146U configuré pour traiter des paquets de données applicatives sélectionnés par le filtre 143 du module de routage 142.

Ce module de traitement applicatif 146U est configuré pour traiter les paquets de données aiguillés par le filtre 143 selon des règles prédéterminées et configurables associées à l'application à laquelle les données applicative des paquets de données IP correspondent.

Notamment, le module de traitement applicatif 146U peut être configuré pour dupliquer un paquet de données IP ou bien pour le modifier.

Par exemple, le traitement au niveau de leur partie de transport IP, réalisé sous contrôle de l'application, peut consister à modifier la partie de transport IP des paquets de données afin de les acheminer selon un mode d'acheminement spécifique tel que, par exemple, un mode unicast sur la liaison de raccordement Un ou un mode broadcast sur la liaison d'accès Uu permettant la diffusion de paquets de données IP sur la partie descendante de la liaison d'accès (i.e. du noeud de relais vers les équipements d'utilisateur).

De même, le traitement des données applicatives des paquets peut consister en un traitement de type proxy, connu de l'homme du métier, ou par une application installée sur le noeud de relais qui va modifier les paquets au niveau 7, par exemple une application de type Push-To-Talk (PTT) ou bien serveur de localisation (Localisation server) connues de l'homme du métier.

Le module de traitement applicatif 146U et/ou 146C est en outre configuré pour requérir la configuration du filtre au serveur d'application du filtre 143.

Dans le plan de contrôle, le module de traitement applicatif 146C est configuré pour établir le chemin entre le module de traitement applicatif du plan d'utilisateur 146U et le serveur d'application 30 et pour démarrer et contrôler le filtre 143 et le module de traitement applicatif 146U dans le plan d'utilisateur.

### II. Mise en oeuvre

Un mode de mise en oeuvre du procédé selon l'invention va maintenant être illustré en référence à la figure 5 en prenant pour exemple une communication de groupe gérée par le serveur d'application 30 et impliquant les équipements d'utilisateurs 150.

La sous-couche NAS 1455 établit, via l'entité de gestion de la mobilité MME 125, la signalisation nécessaire au noeud de relais 140 pour recevoir, dans une étape préliminaire E0, le ou les critères de sélection du serveur d'application 30 de manière à ce que le noeud de relais 140 les mette en oeuvre dans le filtre 143.

### a) Exemple 1 : envoi de paquets de données par le serveur d'application 30

Dans cet exemple de communication de groupe, le filtre 143 est configuré pour identifier les paquets de données relatifs à ladite communication de groupe, par exemple à partir d'un critère correspondant à l'adresse IP du serveur d'application 30 qu'ils contiennent ou d'un numéro de port.

De même, le module de traitement applicatif 146U est configuré pour dupliquer les paquets de données sélectionnés par le filtre 143 et pour ajouter l'adresse de chaque équipement d'utilisateurs 150 destinataire desdits paquets.

Dans cet exemple, des paquets de données IP relatifs à la communication de groupe sont tout d'abord envoyés par le serveur d'application 30 à destination du noeud de relais 140 dans un unique tunnel de communication, par exemple de type GTP-u bien connu de l'homme du métier.

Pour ce faire, ces paquets de données applicatives transitent par le réseau d'interconnexion 20, la passerelle de réseau pour paquets de données PGW 110, la passerelle servante SGW 120, le noeud B donneur 130 et sont reçus dans une étape E1 par le deuxième sous-module de communication 142bU du module de routage 142U du noeud de relais 140.

Le deuxième sous-module de communication 142bU les transmet au filtre 143 qui détecte que ces paquets de données sont relatifs à une communication de groupe entre le serveur d'application 30 et les équipements d'utilisateurs 150, car ils contiennent l'adresse IP du serveur d'application 30, et les sélectionnent donc dans une étape E2 puis les transmet alors au module de traitement applicatif 146U.

Le module de traitement applicatif 146U traite alors dans une étape E3 les paquets sélectionnés par le filtre 143 en les dupliquant et en ajoutant l'adresse de chaque équipement d'utilisateurs 150 destinataires desdits paquets.

Le module de traitement 146 les transmet ensuite au premier sous-module de communication 142aU qui les envoie dans une étape E4 à chacun des équipements d'utilisateurs 150.

### b) Exemple 2 : envoi de paquets de données par un équipement d'utilisateur 150

Dans cet exemple de communication de groupe, le filtre 143 est configuré pour identifier les paquets de données relatifs à ladite communication de groupe, par exemple à partir d'un critère correspondant de l'adresse IP de l'équipement d'utilisateur 150 émetteur desdits paquets.qu'ils contiennent.

De même, le module de traitement applicatif 146U est configuré pour ajouter l'adresse des équipements d'utilisateurs 150 destinataires desdits paquets.

Dans cet exemple, des paquets de données IP relatifs à la communication de groupe sont tout d'abord envoyés par un équipement d'utilisateur 150 à destination du noeud de relais 140.

Ces paquets sont reçus dans une étape E1 par le premier sous-module de communication 142aU du module de routage 142U du noeud de relais 140.

Le premier sous-module de communication 142bU les transmet au filtre 143 qui détecte que ces paquets de données sont relatifs à une communication de groupe entre les équipements d'utilisateurs 150 et le serveur d'application 30, car ils contiennent l'adresse de destination IP du serveur d'application 30, et les sélectionnent donc dans une étape E2 avant de les transmettre au module de traitement applicatif 146U.

Le module de traitement applicatif 146U traite alors dans une étape E3 les paquets sélectionnés par le filtre 143 en ajoutant l'adresse des équipements d'utilisateurs 150 destinataires desdits paquets pour les paquets de données qui doivent être retransmis par le premier sous-module de communication 142aU du module de routage 142U.

Le module de traitement 146U les transmet ensuite au premier sous-module de communication 142aU qui les envoie dans une étape E4 aux équipements d'utilisateurs 150 destinataires ou bien deuxième sous-module de communication 142bU qui les envoie dans une étape E4 au serveur d'application qui gère la communication de groupe, par exemple pour qu'il les transmette à d'autres équipements d'utilisateurs (non représentés) connectés au réseau d'interconnexion 20.

L'invention permet donc avantageusement à un noeud de relais d'un réseau LTE d'analyser des paquets de données applicatives afin de les traiter lorsqu'ils répondent à un ou plusieurs critères de sélection.

Avec le procédé et le noeud de relais selon l'invention, dans le cas notamment d'une communication de groupe, le nombre de paquets envoyés par le serveur d'application gérant ladite communication de groupe est donc avantageusement divisé par le nombre d'équipements d'utilisateur destinataires desdits paquets par rapport à une communication de groupe réalisée via un noeud de relais de l'art antérieur. Cela permet de réduire considérablement la consommation de ressources dans le réseau de communication LTE et notamment entre le noeud de relais et le noeud B donneur.

Le procédé et le noeud de relais selon l'invention permettent également d'éviter que des paquets de données émis par un équipement d'utilisateur connecté au noeud de relais à destination d'autres équipements d'utilisateur connectés audit noeud de relais ne soient envoyés par le noeud de relais au serveur d'application (tromboning) avant de revenir jusqu'au noeud pour être transmis aux équipements d'utilisateur destinataires, ce qui permet là encore de réduire considérablement la consommation de ressources dans le dans le réseau de communication LTE et notamment entre le noeud de relais et le noeud B donneur.

## Revendications

1. Procédé de communication de paquets de données dans un réseau de télécommunications (10), ledit procédé, mis en oeuvre par un noeud de relais (140) dudit réseau de télécommunications (10) entre une station de base (130) et plusieurs équipements d'utilisateur (150) comprenant
- une étape (E1) de réception d'une pluralité de paquets de données ;
- une étape (E2) de sélection, selon au moins un critère de sélection, d'au moins un paquet de données parmi les paquets de données reçus ;
étant **caractérisé en ce qu'**il comprend:
- une étape (E3) de traitement applicatif du paquet de données sélectionné, comprenant une duplication du paquet de données sélectionné et/ou une modification du paquet de données sélectionné, pour y ajouter l'adresse d'un équipement d'utilisateur destinataire dudit paquet de données sélectionné ; et
- une étape (E4) d'émission du paquet de données traité vers l'équipement d'utilisateur (150) destinataire.

2. Procédé selon la revendication précédente, **caractérisé en ce que**, le noeud de relais (140) étant configuré pour communiquer avec la station de base (130) sur un premier lien de communication radio (Un) et avec chaque équipement d'utilisateur (150) sur un deuxième lien de communication radio (Uu), la pluralité de paquets de données est reçue sur le premier lien de communication radio (Un) ou sur le deuxième lien de communication radio (Uu) et l'émission des paquets de données traités est réalisée sur le deuxième lien de communication radio (Uu).

3. Procédé selon l'une des revendications précédentes, **caractérisé en ce que**, les paquets de données étant des paquets de type Internet Protocol (IP), le critère de sélection des paquets de données IP est l'un d'une adresse IP source et/ou destination, d'un numéro de port source et/ou destination, d'un type de protocole et/ou de la nature de l'émetteur ou du destinataire du paquet.

4. Procédé selon la revendication précédente, **caractérisé en ce que** l'étape (E3) de traitement applicatif du paquet de données sélectionné comprend une modification de la partie de transport IP dudit paquet.

5. Procédé selon l'une des revendications précédentes, **caractérisé en ce qu'**il comprend en outre une étape préliminaire (E0) de réception, de préférence d'un serveur d'application (30), du critère de sélection.

6. Noeud de relais (140) entre une station de base (130) et plusieurs équipements d'utilisateur (150) pour la communication de paquets de données dans un réseau de télécommunications (10), ledit noeud de relais comprenant un module de routage (142U/142C) configuré pour recevoir et pour émettre des paquets de données, le noeud de relais étant **caractérisé en ce que** le module de routage (142U/142C) est en outre configuré pour sélectionner, selon au moins un critère de sélection, au moins un paquet de données parmi les paquets de données reçus et **en ce qu'**il comprend un module de traitement applicatif (146U/146C) configuré pour traiter le paquet de données sélectionné par le module de routage (142U/142C), ledit traitement applicatif comprenant une duplication du paquet de données sélectionné et/ou une modification du paquet de données sélectionné, pour y ajouter l'adresse d'un équipement d'utilisateur destinataire dudit paquet de données sélectionné.

7. Système de télécommunications (1) comprenant :
- un noeud de relais (140) selon la revendications ;
- plusieurs équipements d'utilisateur (150) configurés pour échanger des paquets de données avec ledit noeud de relais (140) ;
- une station de base (130) configurée pour échanger des paquets de données avec le noeud de relais (140).

8. Programme d'ordinateur comportant des instructions pour la mise en oeuvre du procédé selon l'une des revendications 1 à 5 lorsque le programme est exécuté par au moins un processeur.

## Patentansprüche

1. Kommunikationsverfahren von Datenpaketen in einem Telekommunikationsnetz (10), wobei das genannte Verfahren, das durch einen Relaisknoten (140) des genannten Telekommunikationsnetzes (10) zwischen einer Basisstation (130) und mehreren Ausrüstungen (150) eines Nutzers umgesetzt wird, umfasst
- einen Empfangsschritt (E1) einer Vielzahl von Datenpaketen;
- einen Auswahlschritt (E2) gemäß wenigstens einem Auswahlkriterium wenigstens eines Datenpakets aus den empfangenen Datenpaketen;
**dadurch gekennzeichnet, dass** es umfasst:
- einen applikativen Verarbeitungsschritt (E3) des ausgewählten Datenpakets, umfassend eine Duplizierung des ausgewählten Datenpakets und / oder eine Modifizierung des ausgewählten Datenpakets, um dort die Adresse einer Ausrüstung eines Empfängernutzers des genannten ausgewählten Datenpakets hinzuzufügen; und
- einen Sendeschritt (E4) des bearbeiteten Datenpakets zur Ausrüstung (150) des Empfängernutzers.

2. Verfahren gemäß dem voranstehenden Anspruch, **dadurch gekennzeichnet, dass**, da der Relaisknoten (140), der konfiguriert ist, um mit der Basisstation (130) auf einer ersten Funkkommunikationsverbindung (Un) und mit jeder Ausrüstung (150) des Nutzers auf einer zweiten Funkkommunikationsverbindung (Uu) zu kommunizieren, die Vielzahl von Datenpaketen auf der ersten Funkkommunikationsverbindung (Un) oder auf der zweiten Funkkommunikationsverbindung (Uu) empfangen wird und das Senden der bearbeiteten Datenpakete an die zweite Funkkommunikationsverbindung (Uu) realisiert wird.

3. Verfahren gemäß einem der voranstehenden Ansprüche, **dadurch gekennzeichnet, dass**, da die Datenpakete vom Typ Internet-Protokoll (IP) sind, das Auswahlkriterium der Datenpakete IP eine der Quell- und / oder Ziel-IP-Adressen einer Nummer eines Quell und / oder Zielports, eines Protokolltyps und / oder der Art des Absenders oder des Empfängers des Pakets ist.

4. Verfahren gemäß dem voranstehenden Anspruch **dadurch gekennzeichnete, dass** der applikative Verarbeitungsschritt (E3) des ausgewählten Datenpakets eine Modifizierung des IP-Transportteils des genannten Pakets umfasst.

5. Verfahren gemäß einem der voranstehenden Ansprüche, **dadurch gekennzeichnet, dass** es darüber hinaus einen einleitenden Empfangsschritt (E0), bevorzugt von einen Anwendungsserver (30), des Auswahlkriteriums umfasst.

6. Relaisknoten (140) zwischen einer Basisstation (130) und mehreren Nutzerausrüstungen (150) für die Kommunikation von Datenpaketen in einem Telekommunikationsnetz (10), wobei der genannte Relaisknoten ein Routermodul (142U / 142C) umfasst, das konfiguriert ist, um Datenpakete zu empfangen und zu senden, wobei der Relaisknoten **dadurch gekennzeichnet ist, dass** das Routermodul (142U / 142C) darüber hinaus konfiguriert ist, um gemäß einem Auswahlkriterium wenigstens ein Datenpaket aus den empfangenen Datenpaketen auszuwählen und dass es ein applikatives Verarbeitungsmodul (146U / 146C) umfasst, das konfiguriert ist, um das von dem Routermodul (142U / 142C) ausgewählte Datenpaket zu verarbeiten, wobei die genannte applikative Verarbeitung eine Duplizierung des ausgewählten Datenpakets und / oder eine Modifizierung des ausgewählten Datenpakets umfasst, um dort die Adresse einer Ausrüstung eines Empfängernutzers des genannten ausgewählten Datenpakets hinzuzufügen.

7. Telekommunikationssystem (1), umfassend:
- einen Relaisknoten (140) gemäß Anspruch 6;
- mehrere Ausrüstungen (150) eines Nutzers, die konfiguriert sind, um Datenpakete mit dem genannten Relaisknoten (140) auszutauschen;
- eine Basisstation (130), die konfiguriert ist, um Datenpakete mit dem Relaisknoten (140) auszutauschen.

8. Computerprogramm, umfassend Anweisungen für die Umsetzung des Verfahrens gemäß Anspruch 1 bis 5, wenn das Programm von wenigstens einem Prozessor ausgeführt wird.

## Claims

1. Data packet communication method in a telecommunications network (10), said method, implemented by a relay node (140) of said telecommunications network (10) between a base station (130) and several pieces of user equipment (150) comprising
- a step (E1) of receiving a plurality of data packets;
- a step (E2) of selecting, according to at least one selection criterion, at least one data packet out of the data packets received;
being **characterised in that** it comprises:
- a step (E3) of application processing the selected data packet, comprising a duplication of the selected data packet and/or a modification of the selected data packet, in order to add therein the address of a destination piece of user equipment of said selected data packet; and
- a step (E4) of emitting processed data packets to the destination piece of user equipment (150).

2. Method according to the preceding claim, **characterised in that**, the relay node (140) being configured to communicate with the base station (130) over a first radio communication link (Un) and with each piece of user equipment (150) over a second radio communication link (Uu), the plurality of data packets is received over the first radio communication link (Un) or over the second radio communication link (Uu) and the emission of the processed data packets is carried out over the second radio communication link (Uu).

3. Method according to one of the preceding claims, **characterised in that**, as the data packets are packets of the Internet Protocol (IP) type, the selection criterion of the IP data packets is one of a source and/or destination IP address, a source and/or destination port number, a type of protocol and/or the nature of the emitter or of the receiver of the packet.

4. Method according to the preceding claim, **characterised in that** the step (E3) of application processing of the selected data packet comprises a modification of the IP transport portion of said packet.

5. Method according to one of the preceding claims, **characterised in that** it further comprises a preliminary step (E0) of receiving, more preferably from an application server (30), of the selection criterion.

6. Relay node (140) between a base station (130) and several pieces of user equipment (150) for the data packet communication in a telecommunications network (10), said relay node comprising a routing module (142U/142C) configured to receive and to emit data packets, the relay node being **characterised in that** the routing module (142U/142C) is furthermore configured to select, according to at least one selection criterion, at least one data packet from among the data packets received and **in that** it comprises an application processing module (146U/146C) configured to process the selected data packet by the routing module (142U/142C), said application processing comprising a duplication of the selected data packet and/or a modification of the selected data packet, in order to add therein the address of a destination piece of user equipment of said selected data packet.

7. Telecommunications system (1) comprising:
- a relay node (140) according to claim 6;
- several pieces of user equipment (150) configured to exchange data packets with said relay node (140);
- a base station (130) configured to exchange data packets with the relay node (140).

8. Computer programme comprising instructions for the implementation of the method according to one of claims 1 to 5 when the programme is executed by at least one processor.
